# EUROPEAN PATENT SPECIFICATION

(11) **EP 2 119 546 B1**
(45) Date of publication and mention of the grant of the patent: **23.03.2011**
(21) Application number: 09006214.2
(22) Date of filing: 07.05.2009
(51) Int. Cl.: B29B 17/00

(54) **Thermal-electromechanical compacting apparatus for household and community use, for a vertically placed plastic material bottle and method to make the vertically placed bottle compact**
Thermoelektromechanische Verdichtungsvorrichtung für den Haus- und Gemeindegebrauch für eine senkrecht platzierte Kunststoffflasche und Verfahren zur Verdichtung der senkrecht platzierten Flasche
Appareil de compactage thermo-électromécanique pour utilisation domestique et communautaire, pour une bouteille en plastique placée verticalement et procédé de compactage de la bouteille disposée verticalement

(30) Priority: 16.05.2008 IT TV20080074
(43) Date of publication of application: 18.11.2009
(73) Proprietor: Giampaolo, Dalla Valeria, 36071 Arzignano (VI) (IT); Gherardo, Priante, 36071 Arzignano (VI) (IT)
(72) Inventor: Giampaolo, Dalla Valeria, 36071 Arzignano (VI) (IT); Gherardo, Priante, 36071 Arzignano (VI) (IT)
(74) Representative: Massa, Patrizia

(56) References cited:
- EP-A2- 0 816 036
- DE-A1- 10 121 599
- FR-A1- 2 231 497
- FR-A1- 2 734 509
- FR-A1- 2 812 583

## Description

Thermal-electromechanical compacting apparatus for household and community use, for a vertically placed plastic material bottle and method to make a vertically placed bottle compact.

### Domain

The invention finds particular if not even exclusive application in the field of the production of apparatus for household use or for the community use field as catering and beverage serving services, where said apparatus is intended to reduce the overall dimensions of the empty plastic material bottles to be successively sent to the separate collection of waste and then to the waste recycling.

At present wide use is made of plastic material bottles. From a purely economical point of view, the "bottled water" phenomenon produces a product with a low surplus value, which many people considered as a simple, natural if not even as a poor value product. It is true that, being the water packaged, it is provided with a container and it is true that, as with other foodstuffs, the latter constitutes not only an additional service by which the manufacturer adds value to its offer but it is an instrument that cannot be renounced to meet the requirements of the consumer. Therefore the plastic material bottle package acquired throughout the years are more and more relevant in the market modifying the unity of ancient times which wasn't previously present between the product and the service, between water and returnable glass. The manufacturing of the bottle through the handling of polymers had relevant consequences on the whole production chain and on different aspects: a) in the technological profile, since the production phases do not have any resemblance to the ones used for glass, unless to blowing techniques or blow-molding; b) for its outcomes, considering that the transformation of the plastic materials involves considerable environmental impact.

PET and PVC, which are the two most commonly used materials in the bottle manufacturing, are recycled at present. The first one is preferred to the second one, therefore in the cycle of the separate collection of waste, empty plastic material bottles incur greater and greater interest. From the perspective of reducing the encumbrance of the empty bottles and therefore the transportation costs, as well as facilitating the recycling phase of the plastic material, the bottle compacting is good for community spirit, in such a way to be able to dispose of them in the proper container for the separate collection of waste. This is an operation which at present is carried out manually, first slightly opening the bottle-top, then compressing the bottle along the vertical axis, and then closing it with the bottle-top. The depression exercised in this way inside the bottle body allows the same to maintain a more compact shape compared to a bottle which has only been squeezed and not closed later, the latter being a circumstance that, due to the normal spring-back of the material, involves a subsequent expansion, even if only a light expansion, of the material which retains the form of its shape.

### Prior art

DE-101 21599 (Seidel) proposes a heatable press, able to reduce the volume of plastic material bottles. The heating device of the press has an injector in the stroke chamber where the piston acts. The plastic material bottle is placed upside down so that its opening rests on the piston and over the heating means. A hot air fan is provided, and a vertical transmitting coupler for the piston.

FR2668732 (Ducreuz et al.) is an apparatus for reducing the volume of plastic material containers. It includes a lower compartment having, at its base, air intakes enabling the injection of hot air, actuated by a fan, through an electric resistance element. A plate is movable inside the compartment and free to move upwards and downwards in order to compress the softened container and then go back to the resting position.

EP0707932 (Aita et al.) is a compactor of empty plastic material bottles provided with a housing with side closing door, and designed to receive an empty bottle. A device for heating a base zone of the housing designed to receive the bottle base, a compression device designed to compress the bottle above said base zone. Control means for the positioning of the bottle are also provided.

JP11138538 (Yamashita et al.), JP11114960 (Yamashita et al.), JP11114959 (Yamashita et al.) describe a machine for reducing the volume of plastic material bottles. The bottle is inserted into a housing where a hot air flow is fed, lowering the rigidity of the bottom of the bottle in this way. The bottle is then manually compressed.

### Prior art closest to the invention

FR2812583 (Baran) describes a compactor which is provided with an outer decorative shell part, with thermal insulation. Within this there is a compression chamber for adjusting the temperature to a suitable level needed to soften the plastic material physical structure and a piston connected via a jack to an electric motor. The base of the chamber has concentric levels intended to contain the plastic material, and the piston has a conical shape to facilitate the centering of said plastic material bottle. The hot airflow is produced by a fan coupled to an electric resistance element. Moreover safety means protect the user, such as a thermostat and a control for the opening of the inlet door.

It is therefore reasonable to consider as known an apparatus to compact plastic material bottles, essentially comprising:
- a container provided with a side opening for the introduction of the bottle to be compacted within a housing;
- a vertically extending housing intended to contain the bottle;
- a bell-shaped device vertically movable in a coming and going manner to compact the plastic material bottle;
- a peripheral device generating a hot air flow, where the flow is introduced inside the housing of the container in correspondence with the base where the plastic material bottle rests.

### Drawbacks

The described solutions seem not to optimize the compacting or squeezing function of the plastic material bottle particularly in relation to the need to introduce and recover the bottle even if provided with a cap.

Furthermore, the prior art offers large sized, bulky and non-functional apparatus, substantially not very suitable if referred to predominant household use.

### Summary of the invention

This and other aims are reached with this invention according to the characteristics as per the included claims solving the above mentioned problems by means of a thermal-electromechanical compacting apparatus for a vertically placed plastic material bottle and method to make a vertically placed bottle compact which includes:
- a container, provided with an opening for the introduction of the bottle to be compacted within a compacting chamber;
- a vertically extending compacting chamber intended to contain the vertically standing bottle;
- a compacting device along the vertical axis in the compacting chamber consisting of a coming and going movable bell to compact the plastic material bottle;
- a device generating a hot air flow, where said hot air flow is fed inside the compacting chamber of the container in correspondence with the base of said chamber where the bottom of the plastic material bottle rests;
   in which, it is the top portion of the container which is provided with at least one opening through which one can introduce the bottle to be compacted from the top inside the compacting chamber, said opening being possibly closable by means of an electronically controlled movable door; and in which the bell-shaped compacting device located in the compacting chamber, which is vertically movable, is rotatable by at least 90° with respect to its own vertical movement axis; the base of the compacting chamber, in which the bottom of the bottle to be compacted rests, being of the openable type, for controlled discharge of the compacted bottle into a successive removable container placed below the compacting chamber. Method to make a vertically placed bottle compact, in which i) the bottle to be compacted is introduced from the top towards the bottom in the compacting chamber; ii) the compacting cycle is started which includes at least the following steps: a) heating of the bottle to be compacted, b) compacting, c) cooling, d) discharging of the compacted bottle.

### Aims

In this way, by the considerable creative contribution the effect of which constitutes immediate technical progress, various advantages are achieved.

A first aim consists in significantly containing the size of the apparatus.

A second aim is to further increase the compacting cycle of the plastic material bottle, and not to exclude the compacting of the bottles provided with the respective cap.

One more aim is to directly favor the storage of the compacted plastic material bottles.

These and other advantages will appear from the following detailed description of a preferred solution with the aid of the enclosed schematic drawing whose execution details are not to be considered limitative but only and exclusively illustrative.

### Content of the drawings

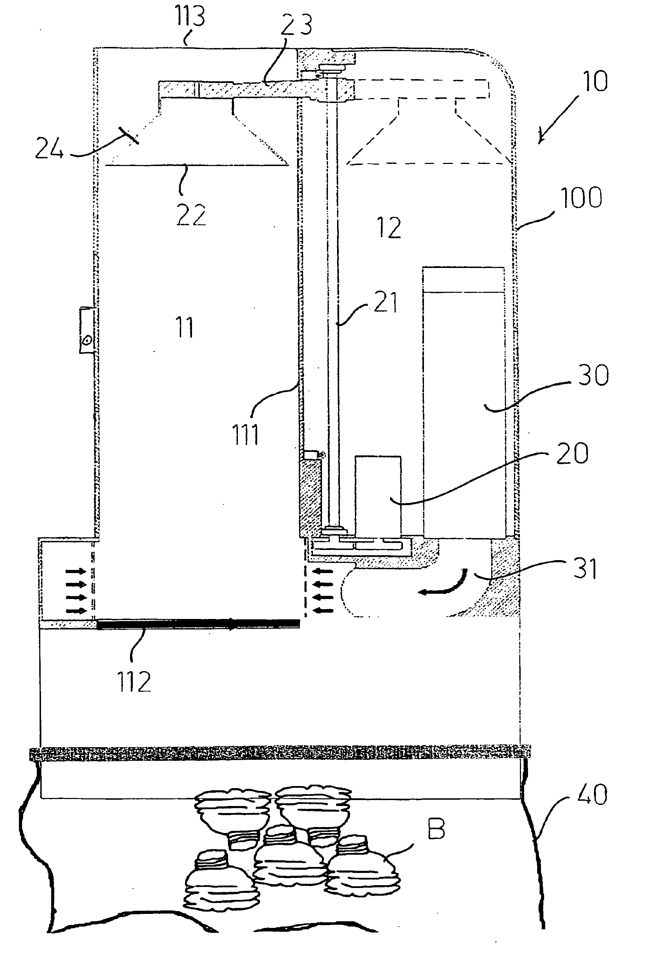

- Figure 1 represents an assembly view of the compacting apparatus object of the present invention;

### Practical embodiment of the invention

The compacting apparatus (10) (Fig. 1), to compact plastic material bottles (B) essentially consists of a vertically extending container (100), which internally includes a vertically extending compacting chamber (11) intended to contain at least one plastic material bottle having various capacities. The compacting chamber (11) is peripherally closed by a wall (111) that divides the compacting chamber (11) on one side from the adjacent technical space (12). The base portion of the compacting chamber (11) consists of a movable bottom (112), for example a sliding bottom or hinged bottom as a door, which is movable from a closed to an opened condition, in such a way that at the end of the compacting process, the bottle (B) compacted or squeezed along its vertical axis, is discharged by gravity from the lower side of said compacting apparatus (10) inside an underlying collection means which is joined to said apparatus (10).

In correspondence with the top side of the compacting apparatus (10) and of the underlying compacting chamber (11), an upwardly opened opening (113) is provided, in such a way that the bottle to be compacted is manually introduced by the user, with a movement from the top towards the bottom.

In the technical space (12) adjacent to the compacting chamber (11) a ratio-motor group (20) is present which moves along the vertical axis, for example by means of a worm screw (21), a compacting device (22, 23) which includes a bell (22) which is joined to the worm screw (21) by means of the supporting arm (23) orthogonal to said worm screw (21). The bell (22) is of the interchangeable type, having the concavity facing towards the bottom and being preferably counter-shaped with respect to the portion of the plastic material bottle to be compacted, whose shape includes at least the neck and the shoulders. A bottle perforating device (24) is integrated into the bell (22) and it is of the hollow type, so that a passage is obtained for the internal air outflow when the bottle is subject to the axial compression phase, both in the presence of the cap and without the cap. Adjacent to the ratio-motor group (20) a thermostat controlled airflow generator (30) is present, which, by means of a channelling (31), distributes the hot airflow predominantly in the lower zone of the compacting chamber (11). In the solution represented in figure 1, the supporting arm (23) of the bell (22) can accomplish a rotation and translation movement on a horizontal plane by an angle not lower than 90° with respect to the longitudinal axis of the worm screw (21). The rotation and translation movement on a horizontal plane of the supporting arm (23) and of the bell (22) is coordinated with respect to the phases of the method to make a vertically placed bottle compact, in such a way as to allow the discharge phase of the compacted bottle (B) from the compacting chamber (11) before the beginning of a following compacting phase of a second bottle, and in order to allow the introduction of said plastic material bottle from the top.

In a preferred solution, the compacting apparatus (10) is prearranged with two adjacent first and second compacting chambers (11), possibly of the intercommunicating type, with, in correspondence with the top side of the container (100), one or more openings, in this case two adjacent openings (113), said openings being possibly closable by a proper door. In this way the arm (23) with the corresponding bell (22), at the end of the compacting cycle in the first chamber (11) moves in correspondence with the second compacting chamber (11) still not being used and loaded with a bottle to be compacted. At the end of the compacting cycle in the second compacting chamber (11) the compacting device (22, 23) is placed again in correspondence with the first relative compacting chamber (11) loaded with the bottle to be compacted and allowing the second adjacent compacting chamber (11) to be loaded with a second bottle to be squeezed.

A removable bag or basket (40) is an integral part of the compacting apparatus (10) for the collection of the compacted bottles (B), which is placed below the compacting apparatus (10) and in correspondence with the discharging opening of the compacting chamber (11) which is closed by the movable bottom (112).

The method to make a vertically placed bottle compact by means of the apparatus (10) consists in:
i) introduction of the bottle to be compacted from the top towards the bottom through the possibly closable opening (113) which is connected to the underlying compacting chamber (11); a sensor detecting its presence;
ii) manual or automatic start of the compacting cycle of the plastic material bottle which includes at least the following steps: a) positioning, by means of rotation and translation, of the arm (23) and of the bell (22) in the compacting chamber (11) above the neck and shoulder of the bottle to be squeezed, with the start of the heating phase of the bottle to be compacted by means of the feeding of a thermostat controlled hot airflow; b) compacting the bottle by means of the bell (22) which goes down along the vertical axis, until an end-stroke sensor is reached; c) cooling; d) opening the movable bottom (112) and discharging the compacted bottle (B) by gravity into the removable collection bag or basket (40) placed below the compacting apparatus (10).

### Reference

(10) compacting apparatus
(B) plastic material bottles
(100) container
(11) compacting chamber
(111) wall
(12) technical space
(112) movable bottom
(113) upwardly opened opening
(20) ratio-motor group
(21) worm screw
(22) bell
(23) supporting arm
(24) perforating device
(30) thermostat controlled airflow generator
(31) channelling
(40) removable collection bag or basket.

## Claims

1. Thermal-electromechanical compacting apparatus, for a vertically placed plastic material bottle which includes:
- a container (100), provided with an opening (113) for the introduction of the bottle to be compacted within a compacting chamber (11);
- a vertically extending compacting chamber (11) intended to contain the vertically standing bottle;
- a compacting device (22, 23) along the vertical axis in the compacting chamber consisting of a coming and going movable bell (22) to compact the plastic material bottle;
- a device generating a hot air flow (30), where said hot air flow is fed inside the compacting chamber (11) of the container in correspondence with the base of said chamber (11);
**characterized in that** the container (100) is provided with at least one opening (113) on the top portion through which one can introduce inside at least one compacting chamber (11) the bottle to be compacted from the top; and in which the bell-shaped compacting device (22, 23) located in the compacting chamber (11) which is vertically movable, is rotatable by at least 90° with respect to its own vertical movement axis.

2. Thermal-electromechanical compacting apparatus, for a vertically placed plastic material bottle, according to claim 1, **characterized in that** the bottom (112) of the compacting chamber (11) is movable for the controlled discharge of the compacted bottle (B) into a successive removable container (40) placed below the compacting chamber (11).

3. Thermal-electromechanical compacting apparatus, for a vertically placed plastic material bottle, according to claim 1 and 2, **characterized in that** the compacting apparatus (10) is prearranged with two adjacent first and second compacting chambers (11), possibly of the intercommunicating type, with, in correspondence with the top side of the container (100), one or more adjacent openings (113) possibly closable by a door.

4. Method to make a vertically placed bottle compact with compacting apparatus (10) according to previous claims, **characterized in that** it consists in:
i) introduction of the bottle to be compacted from the top towards the bottom through the possibly closable opening (113) which is connected to the underlying compacting chamber (11); a sensor detecting its presence;
ii) manual or automatic start of the compacting cycle of the plastic material bottle which includes at least the following steps: a) positioning, by means of rotation and translation, of the arm (23) and of the bell (22) in the compacting chamber (11) above the neck and shoulder of the bottle to be squeezed, with the start of the heating phase of the bottle to be compacted by means of the feeding of a thermostat controlled hot airflow; b) compacting the bottle by means of the bell (22) which goes down along the vertical axis, until an end-stroke sensor is reached; c) cooling; d) opening the movable bottom (112) and discharging the compacted bottle (B) by gravity into the removable collection bag or basket (40) placed below the compacting apparatus (10).

## Patentansprüche

1. Thermoelektromechanische Verdichtungsvorrichtung für eine senkrecht plazierte Kunststoffflasche, die folgendes umfasst:
- einen Behälter (100) mit einer Öffnung (113) für die Einführung der in einer Verdichtungskammer (11) zu verdichtenden Flasche;
- eine senkrecht verlaufende Verdichtungskammer (11) zur Aufnahme der senkrecht stehenden Flasche;
- eine Verdichtungsvorrichtung (22,23) entlang der senkrechten Achse in der Verdichtungskammer, bestehend aus einer sich hin und her bewegenden Glocke (22), um die Kunststoffflasche zu verdichten;
- eine Vorrichtung, die eine Heißluftströmung (30) erzeugt, die an der Basis der Verdichtungskammer (11) in die Verdichtungskammer (11) des Behälters geführt wird; **gekennzeichnet dadurch, dass** der Behälter (100) mindestens eine Öffnung (113) auf dem Oberteil aufweist, wodurch man die zu verdichtende Flasche von oben in mindestens eine Verdichtungskammer (11) einführen kann und wobei die glockenförmig Verdichtungsvorrichtung (22, 23) in der Verdichtungskammer (11), die senkrecht beweglich ist, um mindestens 90° in bezug auf ihre senkrechte Bewegungsachse drehbar ist.

2. Thermoelektromechanische Verdichtungsvorrichtung für eine senkrecht plazierte Kunststoffflasche nach Anspruch 1, **gekennzeichnet dadurch, dass** der Boden (112) der Verdichtungskammer (11) beweglich ist, für das kontrollierte Entladen der verdichteten Flasche (b) in einen abnehmbaren Behälter (40) unterhalb der Verdichtungskammer (11).

3. Thermoelektromechanische Verdichtungsvorrichtung für eine senkrecht plazierte Kunststoffflasche nach Anspruch 1 und 2, **gekennzeichnet dadurch, dass** die Verdichtungsvorrichtung (10) mit zwei benachbarten ersten und zweiten Verdichtungskammern (11) ausgestattet ist, die möglicherweise miteinander verbunden sind, mit, an der Oberseite des Behälters (100), einer oder mehreren benachbarten Öffnungen (113), die möglicherweise durch eine Tür verschließbar sind.

4. Verfahren zum Verdichten einer senkrecht plazierten Flasche mit einer Verdichtungsvorrichtung (10) nach den vorherigen Ansprüchen, **gekennzeichnet dadurch, dass** es aus folgendem besteht:
i) Einführung der zu verdichtenden Flasche von oben nach unten durch die möglicherweise verschließbare Öffnung (113), die mit der darunterliegenden Verdichtungskammer (11) verbunden ist; ein Sensor erfasst ihr Vorhandensein;
ii) manueller oder automatischer Start des Verdichtungszyklus der Kunststoffflasche, der mindestens die folgenden Phasen umfasst: a) Plazierung des Armes und der Glocke (22) mittels Rotation und Translation (23) in der Verdichtungskammer (11) oberhalb des Halses und der Schulter der zusammenzupressenden Flasche, mit dem Start der Erhitzungsphase der zu verdichtenden Flasche mittels Zuführung eines durch Thermostat kontrollierten heißen Luftstroms; b) Verdichtung der Flasche mittels der Glocke (22), die sich entlang der senkrechten Achse nach unten bewegt, bis ein Endanschlagssensor erreicht wird; c) Abkühlung; d) Öffnung des beweglichen Bodens (112) und Entladung der verdichteten Flasche (b) durch Schwerkraft in die abnehmbare Sammeltasche oder -korb (40) unterhalb der Verdichtungsvorrichtung (10).

## Revendications

1. Appareil de compactage électromécanique thermique, pour une bouteille de matière plastique placée verticalement, qui inclut :
- un récipient (100) pourvu d'une ouverture (113) pour l'introduction de la bouteille à compacter dans une chambre de compactage (11);
- une chambre de compactage qui s'étend verticalement (11) destinée à contenir la bouteille positionnée verticalement ;
- un dispositif de compactage (22, 23) le long de l'axe vertical dans la chambre de compactage, composé d'une cloche mobile qui se déplace de l'avant à l'arrière (22) pour compacter la bouteille de matière plastique ;
- un dispositif qui génère un débit d'air chaud (30) qui est porté dans la chambre de compactage (11) du récipient près de la base de ladite chambre (11) ;
**caractérisé en ce que** le récipient (100) est pourvu d'au moins une ouverture (113) sur la partie supérieure, à travers laquelle on peut introduire la bouteille à compacter d'en haut dans au moins une chambre de compactage (11) ; et où le dispositif de compactage en forme de cloche (22, 23) situé dans la chambre de compactage (11) qui est verticalement mobile, est rotatif d'au moins 90° par rapport à son axe de mouvement vertical.

2. Appareil de compactage électromécanique thermique, pour une bouteille de matière plastique placée verticalement, selon la revendication 1, **caractérisé en ce que** le fond (112) de la chambre de compactage (11) est mobile, pour la décharge contrôlée de la bouteille compactée (B) dans un récipient successif amovible (40) placé au-dessous de la chambre de compactage (11).

3. Appareil de compactage électromécanique thermique, pour une bouteille de matière plastique placée verticalement, selon la revendication 1 et 2, **caractérisé en ce que** l'appareil de compactage (10) est arrangé avec deux chambres de compactage (11) adjacentes, une première et une deuxième, possiblement du type intercommuniquant, avec, près du côté supérieur du récipient (100), une ou plusieurs ouvertures adjacentes (113) qu'on peut possiblement fermer par une porte.

4. Méthode pour compacter une bouteille placée verticalement avec un appareil de compactage (10) selon les revendications précédentes, **caractérisé en ce qu'**il consiste en :
i) l'introduction de la bouteille à compacter à partir du haut vers le fond à travers l'ouverture qu'on peut possiblement fermer (113) qui est liée à la chambre de compactage située en dessous (11) ; un capteur détecte sa présence ;
ii) démarrage automatique ou manuel du cycle de compactage de la bouteille de matière plastique qui inclut au moins les étapes suivantes : a) positionnement du bras et de la cloche (22) au moyen de rotation et translation (23) dans la chambre de compactage (11) au-dessus du collet et de l'épaule de la bouteille à compacter, avec le démarrage de la phase de chauffage de la bouteille à compacter au moyen de l'alimentation d'un débit d'air chaud contrôlé par un thermostat; b) compactage de la bouteille au moyen de la cloche (22) qui descend le long de l'axe vertical, jusqu'à ce qu'un capteur de coup d'extrémité est atteint; c) refroidissement; d) ouverture du fond mobile (112) et déchargement de la bouteille compactée (b) par gravité dans le sac ou panier de récolte amovible (40) placé au-dessous de l'appareil de compactage (10).
